# FASCICULE DE BREVET EUROPEEN

(11) **EP 4 099 845 B1**
(45) Date de publication et mention de la délivrance du brevet: **11.10.2023**
(21) Numéro de dépôt: 22700759.8
(22) Date de dépôt: 11.01.2022
(51) Int. Cl.: A23L 29/256, A23C 13/00, A23P 20/10, A23P 30/25

(54) **PROCÉDÉ DE PRÉPARATION D'UN GEL D'ENROBAGE DE MÊLÉE DE SAUCISSE COMPRENANT UN TRAITEMENT À HAUTE PRESSION**
VERFAHREN ZUR HERSTELLUNG EINES WURSTTEIGBESCHICHTUNGSGELS MIT EINER HOCHDRUCKBEHANDLUNG
METHOD FOR PREPARING A SAUSAGE BATTER COATING GEL COMPRISING A HIGH-PRESSURE TREATMENT

(30) Priorité: 09.02.2021 FR 2101223
(43) Date de publication de la demande: 14.12.2022
(73) Titulaire: Sonjal, 35150 Brie (FR)
(72) Inventeur: TANGUY, Alain, 35150 JANZE (FR)
(74) Mandataire: Ermeneux, Bertrand
(86) Numéro de dépôt international: PCT/EP2022/050462
(87) Numéro de publication internationale: WO 2022/171372

(56) Documents cités:
- EP-A1- 1 311 165
- FR-A1- 2 973 988
- US-A1- 2013 123 374

## Description

### 1. Domaine de l'invention

L'invention se rapport au domaine de l'agroalimentaire et plus particulièrement à la transformation de la viande sous forme de charcuteries.

Plus précisément, l'invention concerne un procédé de préparation d'une composition aqueuse d'enrobage destinée à être appliquée par co-extrusion autour d'une préparation alimentaire, une composition aqueuse et un procédé de fabrication d'une saucisse correspondants.

L'invention trouve notamment une application pour la fabrication de saucisses fraiches, à cuire ou à bouillir, et de saucisses sèches.

### 2. Etat de la technique

Depuis plusieurs années, on a cherché à substituer les boyaux de saucisse d'origine animale par des boyaux à base de matière végétale, pour des raisons techniques, sanitaires et/ou religieuses.

On connaît, par exemple des demandes de brevet FR2973988, EP1311165 ou WO9955165, des boyaux végétaux pour saucisse à base d'eau, d'alginate et d'autres polysaccharides, tels que de l'amidon, des CMC (acronyme de carboxyméthylcellulose), de la gomme de guar ou des dérivés cellulosiques. Pour former ces boyaux on applique une composition aqueuse sous forme de gel autour de la mêlée de viande, qui forme une enveloppe résistante autour de la mêlée après gélification du gel.

Ces gels aqueux qui sont obtenus par un simple mélange des différents composés s'avère difficiles à travailler sur certaines co-extrudeuses. Ainsi par exemple, l'enveloppe se déchire lorsqu'on cherche à torsader l'enveloppe pour assurer la fermeture des extrémités de saucisses produites en continu, les unes à la suite des autres.

Un autre inconvénient de la mise en oeuvre des gels connus est que l'enveloppe obtenue après gélification du gel a tendance à se décoller de la mêlée de viande, du fait d'un manque d'adhérence entre la mêlée et l'enveloppe. Ce décollement, qui s'accompagne d'une déformation de la saucisse, voire d'un déchirement de l'enveloppe, est d'autant plus prononcé à la cuisson des saucisses, ce qui peut rebuter certains consommateurs.

Par ailleurs, il existe désormais une demande de plus en plus importante pour des saucisses sans conservateur.

On constate cependant que si on n'utilise pas de conservateur dans la composition des gels aqueux connus, des bactéries et plus généralement une flore microbienne se développent très rapidement en quelques jours et prolifèrent au sein des gels ce qui limite très fortement la capacité de conservation des gels et en conséquence leur intérêt dans le cadre d'une mise en oeuvre industrielle.

### 3. Objectifs de l'invention

L'invention a donc notamment pour objectif de pallier les inconvénients de l'état de la technique cités ci-dessus.

Plus précisément l'invention a pour objectif de fournir une technique de préparation d'une composition aqueuse d'enrobage destinée à être appliquée par co-extrusion autour d'une préparation alimentaire qui permette d'obtenir, après gélification, des enveloppes plus résistantes, susceptibles d'être torsadées et/ou suspendues sans risque de déchirement de l'enveloppe, et qui adhèrent de façon convenable à la préparation alimentaire.

Un objectif de l'invention est également de fournir une telle technique qui permette de stabiliser une composition aqueuse sans conservateur sur plusieurs semaines, voire plusieurs mois.

Un autre objectif de l'invention est de fournir une telle technique qui soit simple à mettre en oeuvre.

Un objectif de l'invention est également de proposer une telle technique qui soit d'un coût de revient économiquement acceptable.

Encore un objectif de l'invention est de fournir une telle technique qui n'affecte ni les propriétés organoleptiques, ni la couleur des saucisses.

### 4. Exposé de l'invention

Ces objectifs, ainsi que d'autres qui apparaitront par la suite sont atteints à l'aide d'un procédé de préparation d'une composition aqueuse d'enrobage destinée à être appliquée par co-extrusion autour d'une préparation alimentaire et mise en contact avec un agent de gélification, tel que du chlorure de calcium, pour former une enveloppe autour de ladite préparation alimentaire, ladite composition comprenant essentiellement de l'eau et 2 à 10 % en poids humide d'alginate.

Dans le cadre de l'invention, la préparation alimentaire peut être par exemple une préparation de viande, une préparation convenant à un régime alimentaire végétarien ou une préparation au fromage. Il peut par ailleurs s'agir d'une préparation pour l'alimentation humaine ou animale.

Il convient par ailleurs de noter que dans le cadre de l'invention, l'alginate peut être de l'alginate de sodium, de l'alginate de potassium, de l'alginate d'ammonium, de l'alginate de calcium ou de l'alginate de propane-1,2-diol. Enfin, l'eau de la composition peut être de l'eau du réseau d'eau potable ou de l'eau déminéralisée ou adoucie, sans sortir du cadre de l'invention.

Selon l'invention, après mélange d'au moins l'eau et l'alginate de la composition, ledit mélange est exposé à une haute pression d'au moins 1400 bars, et de préférence d'au moins 1800 bars, pendant au moins 0,1 seconde. Ainsi, l'invention propose d'exposer une composition aqueuse à base d'alginate à des hautes pressions, et plus précisément d'exposer la composition aqueuse à des pressions d'au moins 1400 bars, afin d'améliorer les caractéristiques de l'enveloppe obtenue après gélification de la composition aqueuse.

Les inventeurs ont en effet constaté, de façon surprenante et inattendue, qu'en exposant la composition aqueuse à des hautes pressions de plus de 1400 bars, on améliore la résistance mécanique de l'enveloppe, et notamment la résistance à la torsion, à la traction et à la pénétration, et par ailleurs, on observe une amélioration de l'adhérence entre l'enveloppe et la préparation alimentaire autour de laquelle elle a été appliquée par co-extrusion.

Selon les inventeurs, une hypothèse que pourrait expliquer ce phénomène est que les hautes pressions modifieraient l'orientation des macromolécules constituant l'alginate et/ou influenceraient les propriétés cinétiques d'échange entre les cations de l'alginate et les ions calcium, ce qui augmenterait l'affinité de l'alginate avec les ions calcium, ou en d'autres termes la capacité de l'alginate à piéger les ions calcium.

On notera également qu'avantageusement, ledit mélange devant être placé dans un étui souple pour être exposé à une haute pression, il n'est généralement pas nécessaire ensuite de reconditionner la composition dans un autre contenant.

Dans un mode de réalisation particulier de l'invention, lors de ladite étape d'exposition à une haute pression, ladite composition est exposée à une pression d'au moins 2000 bars pendant au moins 0,1 seconde.

Dans un mode de réalisation particulier de l'invention, lors de ladite étape d'exposition à une haute pression, ladite composition est exposée à une pression d'au moins 1400 bars pendant au moins 5 secondes.

Dans un mode de réalisation particulier de l'invention, lors de ladite étape d'exposition à une haute pression, ladite composition est exposée à une pression d'au moins 1800 bars pendant au moins 3 secondes.

Dans un mode de réalisation particulier de l'invention, lors de ladite étape d'exposition à une haute pression, ladite composition est exposée à une pression d'au moins 1800 bars pendant au moins 5 secondes.

Dans un mode de réalisation particulièrement avantageux de l'invention, lors de ladite étape d'exposition à une haute pression, ladite composition est exposée à une pression d'au moins 4200 bars pendant au moins 0,1 seconde. On inactive ainsi de surcroit au moins partiellement les populations de bactéries présentes dans la composition aqueuse, ce qui permet de stabiliser la composition aqueuse sur un ou plusieurs mois. Ceci permet donc avantageusement de mettre en oeuvre des compositions aqueuses sans conservateur sur des lignes de fabrication industrielle de saucisses ou autre produit alimentaire.

Dans un mode de réalisation particulier de l'invention, préalablement ou lors de ladite étape de mélange, on incorpore à ladite composition au moins un polyssaccharide avec l'eau et l'alginate, ledit polysaccharide appartenant au groupe comprenant au moins :
- amidon modifié ;
- gomme de guar;
- gomme de caroube ;
- gomme de xanthane ;
- dérivé cellulosique.

Dans un mode de réalisation particulièrement avantageux de l'invention, ledit polysaccharide est de la gomme de guar et ledit mélange comprend entre 2 à 7 % en poids humide d'alginate de sodium, et préférentiellement entre 4 et 5% l'alginate de sodium, et entre 0,5 à 6 %, et préférentiellement entre 1,4 et 1,8%, en poids humide de gomme de guar.

Avantageusement, ledit alginate présente un rapport entre acide mannuronique et acide guluronique inférieur ou égal à 1,3.

Selon un aspect préféré de l'invention, ledit mélange présente un pH compris entre 3,8 et 4,2 après ladite exposition à une haute pression.

L'invention concerne également un procédé de fabrication d'une saucisse comprenant une étape d'application par co-extrusion d'une composition aqueuse comprenant essentiellement de l'eau et 2 à 10 % en poids humide d'alginate autour d'une préparation alimentaire, de façon à enrober ladite préparation alimentaire, et une étape de mise en contact de ladite préparation alimentaire enrobée avec un agent de gélification, tel que du chlorure de calcium, de façon à fixer une enveloppe formée à partir de ladite composition aqueuse autour de ladite préparation alimentaire, caractérisé en ce que ladite composition est exposée à une haute pression d'au moins 1400 bars, et de préférence d'au moins 1800 bars, pendant au moins 0,1 seconde, avant ladite étape d'application par co-extrusion.

Il convient de noter que dans le cadre de l'invention, ladite composition peut être exposée à une haute pression dans les heures ou les jours suivants le mélange des composés de la composition, afin d'être conditionnées dans des seaux ou des étuis souples qui seront livrés sur le site de fabrication des saucisses par co-extrusion, mais aussi bien après avoir été conditionnées, l'exposition à une haute pression pouvant avoir lieu sur le site de production de saucisses peu avant que la composition soit injectée dans une co-extrudeuse, telle qu'une co-extrudeuse .

L'invention concerne encore une composition aqueuse obtenue par le procédé de préparation d'une composition aqueuse décrit ci-dessus, telle que la force à exercer pour faire pénétrer un mobile de 10mm et à une vitesse de 3,5mm/s dans une enveloppe d'enrobage à l'aide d'un pénétromètre est d'au moins 205g/cm², ledit mobile présentant un diamètre 25 mm et une longueur 35 mm et ladite enveloppe étant obtenue en étalant ladite composition de sorte à former une couche sensiblement homogène d'épaisseur 0,15 mm puis en pulvérisant un agent de gélification sur ladite couche.

### 5. Liste des figures

D'autres caractéristiques et avantages de l'invention apparaitront plus clairement à la lecture de la description suivante de plusieurs modes de réalisation de l'invention, donnés à titre de simples exemples illustratifs et non limitatifs, et des dessins annexés parmi lesquels :
- la figure 1 illustre les étapes d'un mode de réalisation d'un procédé de préparation d'une composition aqueuse selon l'invention, de façon synoptique ;

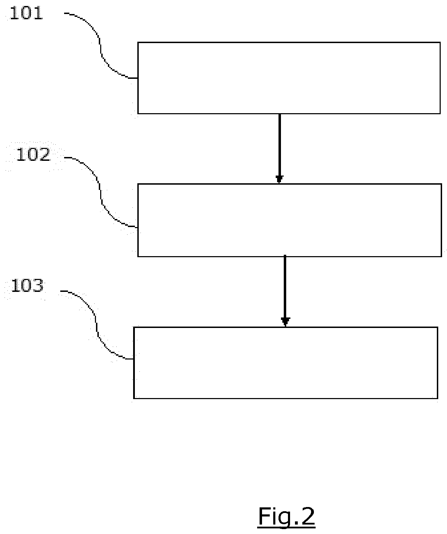

- la figure 2 est une représentation sous forme de diagramme bloc des étapes d'un exemple de procédé de fabrication d'une saucisse selon l'invention à partir d'une composition aqueuse préparée suivant les étapes du procédé présenté en référence à la figure 1.

### 6. Description détaillée de l'invention

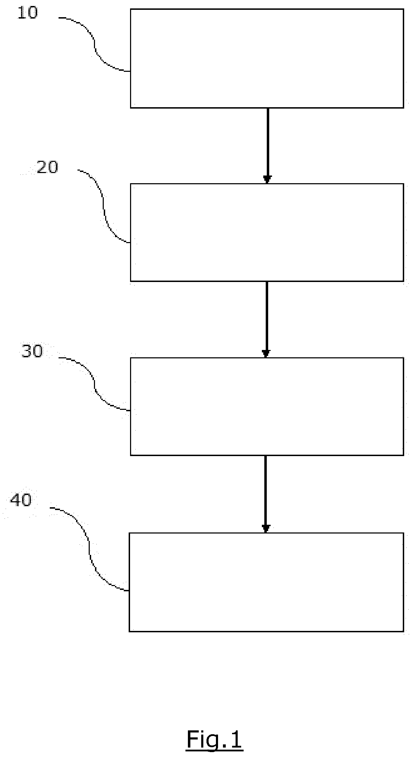

On a illustré sur la figure 1 les étapes d'un exemple de mode de réalisation d'un procédé de préparation d'une composition aqueuse selon l'invention, sous forme de diagramme-bloc.

Dans une première étape 10, on mélange dans un malaxeur 4,5kg d'alginate de sodium en proportion avec 0,4kg d'acide lactique, 0,14 de gomme de guar présentant une viscosité de 600cps et 93,5 litres d'eau adoucie pendant environ 5 minutes. Dans la suite de la description, on nomme COMPOSITION 1 cette composition aqueuse. Il convient de noter que cette composition aqueuse ne contient avantageusement aucun conservateur.

On conditionne ce mélange dans des sacs étanches (étape 20) que l'on place dans l'enceinte d'une unité de pressage à très hautes pressions hydrostatiques commercialisée par exemple par la société Nc Hiperbaric (marque déposée) lors d'une étape 30.

Dans une étape 40, on élève la pression dans l'enceinte jusqu'à 2000 bars et on maintient la pression dans l'enceinte à 4200 bars pendant 5 secondes.

On dépressurise ensuite l'enceinte pour extraire les sacs de l'enceinte. Ces sacs contenant la COMPOSITION 1 traitée par haute pression sont alors prêts pour être livrés sur un site de production de saucisse.

Des essais comparatifs de mise en oeuvre de la COMPOSITION 1 exposée ou non à des hautes pressions sur une ligne de co-extrusion de saucisse, et par exemple une ligne de co-extrusion ConPro(marque déposée) commercialisée par la société Handtmann, ou CC215 commercialisée par la société Vemag ou CoeXSkin(marque déposée) de la société Marel, par exemple, ont montré que la résistance, et notamment la résistance à la torsion et la résistance à la traction, est améliorée dans le cas de la COMPOSITION 1 traitée à haute pression, obtenue à l'étape 40.

Pour ces essais, on a procédé, lors d'une étape 101, à la co-extrusion d'une couche d'enrobage constituée de la COMPOSITION 1, exposée ou non à des hautes pressions, autour d'une mêlée de viande, chassée vers la machine de co-extrusion à l'aide d'un poussoir.

A la sortie de la filière de co-extrusion, une solution de gélification à base de chlorure de calcium a été pulvérisée dans une étape 102 sur le tube continu de saucisse sortant, de façon à fixer la composition aqueuse appliquée autour de la préparation de viande, qui forme alors une enveloppe autour de la viande.

Le tube continu de saucisse est ensuite introduit (étape 103) dans une unité ConProLink(marque déposée) de la société Handtmann, qui assure simultanément le portionnement du tube sous forme de saucisses de longueurs constantes, en torsadant le tube à intervalles réguliers, et la fermeture des extrémités de chaque saucisse par sertissage.

On a notamment constaté qu'en utilisant la COMPOSITION 1 exposée à des hautes pressions, le tube continu de saucisse peut être torsadé plus aisément et que des boyaux des chapelets d'une dizaine de saucisses ne se déchiraient pas sous leur poids, contrairement à ce qui pouvait se produire en utilisant la COMPOSITION 1 sans l'avoir exposé à des hautes pressions.

Par ailleurs, on a mesuré à l'aide d'un pénétromètre Brookfield CT3-V2(marque déposée) que la résistance à la pénétration d'une couche gélifiée sensiblement homogène d'épaisseur 0,15 mm de la COMPOSITION 1 traitée par haute pression obtenue à l'étape 40 était de 236+/-10 g/cm² en moyenne sur 6 mesures, lorsqu'on fait pénétrer un mobile d'un diamètre 25 mm et une longueur 35 mm de 10mm dans la couche à une vitesse de 3,5mm/s, alors qu'elle n'est que de 163+/-10 g/cm² lorsqu'on applique le même protocole de mesure à une couche gélifiée d'épaisseur 0,15mm de la COMPOSITION 1 n'ayant pas été exposée à des hautes pressions. On notera que pour obtenir la couche d'épaisseur 0,15mm, on a co-extrudé la COMPOSITION 1 obtenue à l'étape 40 autour d'une pâte « neutre » obtenue en mélangeant 18 kg en proportion de fibres de cellulose VITACEL (marque déposée) Grade L600-10, aussi connues sous le code des additifs alimentaires E460ii, avec 2,7kg de gomme de guar et 79,3 litres d'eau, On a ensuite pulvérisé du chlorure de calcium sur la couche d'enrobage de la pâte afin d'obtenir une gélification du gel aqueux, puis on a séparé l'enveloppe de la pâte.

On a par ailleurs constaté que l'adhérence de la préparation de viande avec l'enveloppe gélifiée obtenue à partir de la COMPOSITION 1 était sensiblement améliorée si la COMPOSITION 1 avait été au préalable exposée à une pression de 4200 bars pendant 5 secondes.

On présente ci-après un tableau récapitulatif de mesures de pénétration sur 10mm à une vitesse de 3,5mm/s, réalisées à l'aide d'un pénétromètre Brookfield CT3-V2 et d'un mobile d'un diamètre 25 mm et une longueur 35 mm sur une couche gélifiée d'épaisseur 0,15mm obtenue en gélifiant à l'aide de chlorure de calcium une composition aqueuse formée des mêmes composées en proportion que la COMPOSITION 1 et préparée suivant divers procédés de préparation selon l'invention, dans lesquels on a exposé la composition aqueuse à des pressions entre 2000 et 6000 bars pendant 3 secondes à 3 minutes.

Ces couches ont été obtenues en co-extrudant les compositions aqueuses exposées à des hautes pressions autour d'une pâte « neutre » obtenue en mélangeant 18 kg en proportion de fibres de cellulose E460ii, avec 2,7kg de gomme de guar et 79,3 litres d'eau, puis en pulvérisant du chlorure de calcium sur la couche d'enrobage de la pâte, et enfin en séparant l'enveloppe gélifiée de la pâte.

| Nom de la composition | Pression maximale à laquelle a été exposée la composition (bars) | Durée d'exposition à la pression maximale (secondes) | Valeur de la force de pénétration en g/cm² (+/-10 g/cm²) |
|---|---|---|---|
| C01 | 2000 | 3 | 214 |
| C02 | 3000 | 3 | 213 |
| C03 | 4200 | 3 | 222 |
| C04 | 4200 | 15 | 222 |
| CO5 | 4200 | 45 | 227 |
| CO6 | 4200 | 90 | 234 |
| C07 | 4200 | 180 | 213 |
| C08 | 5000 | 180 | 213 |
| C09 | 6000 | 180 | 210 |

On constate à partir de ce tableau qu'aux incertitudes de mesures près, la résistance à la pénétration mesurée varie peu quand on fait varier la pression entre 2000 et 6000 bars ou lorsqu'on fait varier la durée d'exposition entre 3 secondes et 3 minutes.

Dans la suite de la description, on présente dans le tableau ci-dessous des résultats de mesures de pénétration sur 10mm à une vitesse de 4,5mm/s, réalisées à l'aide d'un pénétromètre Brookfield CT3-V2 et d'un mobile d'un diamètre 25 mm et une longueur 35 mm sur une couche gélifiée d'épaisseur 0,15mm d'une composition aqueuse formée des mêmes composées en proportion que la COMPOSITION 1 et sur une couche gélifiée d'épaisseur 0,15mm d'une deuxième composition aqueuse selon l'invention, dénommé dans la suite de la description COMPOSITION 2, préparée en mélangeant 6kg d'alginate de sodium en proportion avec 0,4 kg d'acide lactique et 93,6 litres d'eau déminéralisée.

Pour ces essais on a préparé deux versions de ces deux compositions, l'une ayant été exposée à une pression de 6000 bars pendant 3 minutes et l'autre non.

| Formulation de la composition | Exposition à une pression de 6000 bars pendant 3 minutes (Oui/Non) | Valeur de la force de pénétration en g/cm² (+/- 10 g/cm²) |
|---|---|---|
| Identique à celle de la COMPOSITION 1 | N | 160 |
| Identique à celle de la COMPOSITION 1 | O | 218 |
| Identique à celle de la COMPOSITION 2 | N | 129 |
| Identique à celle de la COMPOSITION 2 | O | 230 |

On constate à partir de ce tableau, que la valeur de la force de pénétration est sensiblement identique pour les deux compositions aqueuses exposées à une haute pression, ce qui semble indiquer que les hautes pressions agissent principalement sur les propriétés de l'alginate (en effet, ce qui distingue les formulations de ces deux compositions aqueuses est la présence ou non de gomme de guar dans la formulation).

## Revendications

1. Procédé de préparation d'une composition aqueuse d'enrobage destinée à être appliquée par co-extrusion autour d'une préparation alimentaire et mise en contact avec un agent de gélification, tel que du chlorure de calcium, pour former une enveloppe autour de ladite préparation alimentaire, ladite composition comprenant essentiellement de l'eau et 2 à 10 % en poids humide d'alginate, **caractérisé en ce qu'**après mélange d'au moins l'eau et l'alginate de la composition, ledit mélange est exposé à une haute pression d'au moins 1400 bars, et de préférence d'au moins 1800 bars, pendant au moins 0,1 seconde.

2. Procédé selon la revendication 1, **caractérisé en ce que** lors de ladite étape d'exposition à une haute pression, ladite composition est exposée à une pression d'au moins 4200 bars pendant au moins 0,1 seconde.

3. Procédé selon la revendication 1, **caractérisé en ce que** lors de ladite étape d'exposition à une haute pression, ladite composition est exposée à une pression d'au moins 1400 bars pendant au moins 5 secondes.

4. Procédé selon la revendication 1, **caractérisé en ce que** lors de ladite étape d'exposition à une haute pression, ladite composition est exposée à une pression d'au moins 2000 bars pendant au moins 3 secondes.

5. Procédé selon l'une quelconque des revendications 1 à 4, **caractérisé en ce que** préalablement ou lors de ladite étape de mélange, on incorpore à ladite composition au moins un polyssaccharide avec l'eau et l'alginate, ledit polysaccharide appartenant au groupe comprenant au moins :
- amidon ;
- gomme de guar;
- gomme de caroube ;
- gomme de xanthane ;
- dérivé cellulosique.

6. Procédé selon la revendication 5, **caractérisé en ce que** ledit polysaccharide est de la gomme de guar et **en ce que** ledit mélange comprend entre 2 à 7 % en poids humide d'alginate de sodium, et préférentiellement entre 4 et 5% l'alginate de sodium, et entre 0,5 à 6 %, et préférentiellement entre 1,4 et 1,8%, en poids humide de gomme de guar.

7. Procédé selon les revendications 1 à 4, **caractérisé en ce que** ledit alginate présente un rapport entre acide mannuronique et acide guluronique inférieur ou égal à 1,3.

8. Procédé selon l'une quelconque des revendications 1 à 7, **caractérisé en ce que** ledit mélange présente un pH compris entre 3,8 et 4,2 après ladite exposition à une haute pression.

9. Procédé de fabrication d'une saucisse comprenant une étape d'application par co-extrusion d'une composition aqueuse comprenant essentiellement de l'eau et 2 à 10 % en poids humide d'alginate autour d'une préparation alimentaire, de façon à enrober ladite préparation alimentaire, et une étape de mise en contact de ladite préparation alimentaire enrobée avec un agent de gélification, tel que du chlorure de calcium, de façon à fixer une enveloppe formée à partir de ladite composition aqueuse autour de ladite préparation alimentaire, **caractérisé en ce que** ladite composition est exposée à une haute pression d'au moins 1400 bars, et de préférence d'au moins 1800 bars, pendant au moins 0,1 seconde, avant ladite étape d'application par co-extrusion.

10. Composition aqueuse obtenue par le procédé de préparation d'une composition aqueuse selon la revendication 1, **caractérisée en ce que** la force à exercer pour faire pénétrer un mobile de 10mm et à une vitesse de 3,5mm/s dans une enveloppe d'enrobage à l'aide d'un pénétromètre est d'au moins 205g/cm², ledit mobile présentant un diamètre 25 mm et une longueur 35 mm et ladite enveloppe étant obtenue en étalant ladite composition de sorte à former une couche sensiblement homogène d'épaisseur 0,15 mm puis en pulvérisant un agent de gélification sur ladite couche.

## Patentansprüche

1. Verfahren zur Herstellung einer wässrigen Beschichtungszusammensetzung, die zum Aufbringen durch Co-Extrusion um eine Lebensmittelzubereitung und Inkontaktversetzen mit einem Geliermittel wie Calciumchlorid zur Bildung einer Hülle um die Lebensmittelzubereitung bestimmt ist, wobei die Zusammensetzung im Wesentlichen Wasser und 2 bis 10 % Nassgewicht Alginat umfasst, **dadurch gekennzeichnet, dass** nach dem Mischen von mindestens dem Wasser und dem Alginat der Zusammensetzung das Gemisch einem hohen Druck von mindestens 1400 bar und vorzugsweise von mindestens 1800 bar während mindestens 0,1 Sekunde ausgesetzt wird.

2. Verfahren nach Anspruch 1, **dadurch gekennzeichnet, dass** beim Schritt des Aussetzens gegenüber einem hohen Druck die Zusammensetzung einem Druck von mindestens 4200 bar während mindestens 0,1 Sekunde ausgesetzt wird.

3. Verfahren nach Anspruch 1, **dadurch gekennzeichnet, dass** beim Schritt des Aussetzens gegenüber einem hohen Druck die Zusammensetzung einem Druck von mindestens 1400 bar während mindestens 5 Sekunden ausgesetzt wird.

4. Verfahren nach Anspruch 1, **dadurch gekennzeichnet, dass** beim Schritt des Aussetzens gegenüber einem hohen Druck die Zusammensetzung einem Druck von mindestens 2000 bar während mindestens 3 Sekunden ausgesetzt wird.

5. Verfahren nach einem der Ansprüche 1 bis 4, **dadurch gekennzeichnet, dass** vor oder während des Schritts des Mischens mit dem Wasser und dem Alginat mindestens ein Polysaccharid in die Zusammensetzung eingearbeitet wird, wobei das Polysaccharid zu der Gruppe gehört, die mindestens umfasst:
- Stärke;
- Guaran;
- Johannisbrotkernmehl;
- Xanthan;
- Zellulosederivat.

6. Verfahren nach Anspruch 5, **dadurch gekennzeichnet, dass** das Polysaccharid das Guaran ist und dass das Gemisch zwischen 2 bis 7 % Nassgewicht Natriumalginat und vorzugsweise zwischen 4 und 5 % Natriumalginat und zwischen 0,5 und 6 % und vorzugsweise zwischen 1,4 und 1,8 % Nassgewicht Guaran umfasst.

7. Verfahren nach den Ansprüchen 1 bis 4, **dadurch gekennzeichnet, dass** das Alginat ein Verhältnis zwischen Mannuronsäure und Guluronsäure von unter oder gleich 1,3 aufweist.

8. Verfahren nach einem der Ansprüche 1 bis 7, **dadurch gekennzeichnet, dass** das Gemisch nach dem Aussetzen gegenüber einem hohen Druck einen pH zwischen 3,8 und 4,2 aufweist.

9. Verfahren zur Herstellung einer Wurst, umfassend einen Schritt des Aufbringens einer wässrigen Zusammensetzung, die im Wesentlichen Wasser und 2 bis 10 % Nassgewicht Alginat umfasst, um eine Lebensmittelzubereitung durch Co-Extrusion, so dass die Lebensmittelzubereitung umhüllt wird, und einen Schritt des Inkontaktversetzens der umhüllten Lebensmittelzubereitung mit einem Geliermittel wie Calciumchlorid, so dass eine aus der wässrigen Zusammensetzung gebildete Hülle um die Lebensmittelzubereitung fixiert wird, **dadurch gekennzeichnet, dass** die Zusammensetzung einem hohen Druck von mindestens 1400 bar und vorzugsweise von mindestens 1800 bar während mindestens 0,1 Sekunde vor dem Schritt des Aufbringens durch Co-Extrusion ausgesetzt wird.

10. Wässrige Zusammensetzung, erhalten durch das Verfahren zur Herstellung einer wässrigen Zusammensetzung nach Anspruch 1, **dadurch gekennzeichnet, dass** die auszuübende Kraft, um ein Mobile 10 mm und mit einer Geschwindigkeit von 3,5 mm/s in eine Beschichtungshülle mit Hilfe eines Penetrometers eindringen zu lassen, mindestens 205 g/cm² beträgt, wobei das Mobile einen Durchmesser von 25 mm und eine Länge von 35 mm aufweist und die Hülle durch Ausbreiten der Zusammensetzung derart erhalten wird, dass eine etwa gleich dicke Schicht von 0,15 mm gebildet wird, dann durch Sprühen eines Geliermittels auf die Schicht.

## Claims

1. A method for the preparation of an aqueous coating composition intended to be applied by co-extrusion around a food preparation and brought into contact with a gelling agent, such as calcium chloride, in order to form an envelope around said food preparation, said composition essentially comprising water and comprising 2 to 10 w/w % alginate, **characterized in that**, after mixing at least the water and the alginate of the composition, said mixture is exposed to a high pressure of at least 1400 bar, and preferably of at least 1800 bar, for at least 0.1 second

2. The method according to claim 1, **characterised in that** in said high pressure exposure step, said composition is exposed to a pressure of at least 4200 bar for at least 0.1 second.

3. The method according to claim 1, **characterised in that** in said high pressure exposure step, said composition is exposed to a pressure of at least 1400 bar for at least 5 seconds.

4. The method according to claim 1, **characterised in that** in said high pressure exposure step, said composition is exposed to a pressure of at least 2000 bar for at least 3 seconds.

5. The method according to any one of claims 1 to 4, **characterised in that**, before or during said mixing step, at least one polysaccharide is incorporated into said composition with water and alginate, said polysaccharide belonging to the group comprising at least:
- starch ;
- guar gum
- carob gum;
- xanthan gum;
- cellulose derivative.

6. The method according to claim 5, **characterised in that** said polysaccharide is guar gum and **in that** said mixture comprises between 2 and 7 w/w % sodium alginate, and preferably between 4 and 5 w/w % sodium alginate, and between 0.5 and 6 w/w %, and preferably between 1.4 and 1.8 w/w %, guar gum.

7. The method according to claims 1 to 4, **characterised in that** said alginate has a ratio between mannuronic acid and guluronic acid lower than or equal to 1.3.

8. The method according to any one of claims 1 to 7, **characterised in that** said mixture has a pH between 3.8 and 4.2 after said exposure to high pressure.

9. A method for manufacturing a sausage comprising a step of applying by co-extrusion an aqueous composition essentially comprising water and 2 to 10 w/w % alginate around a food preparation, so as to coat said food preparation, and a step of bringing said coated food preparation into contact with a gelling agent such as calcium chloride, so as to fix an envelope formed from said aqueous composition around said food preparation, **characterised in that** said composition is exposed to a high pressure of at least 1400 bar, and preferably of at least 1800 bar, for at least 0.1 second, before said co-extrusion application step.

10. An aqueous composition obtained by the method for the preparation of an aqueous composition according to claim 1, **characterised in that** the force to be exerted to make a load rod penetrate 10 mm into a coating envelope at a speed of 3.5 mm/s with the aid of a penetrometer is at least 205 g/cm², said load rod having a diameter of 25 mm and a length of 35 mm and said envelope being obtained by spreading said composition so as to form a substantially homogeneous layer with a thickness of 0.15 mm and then by spraying a gelling agent onto said layer.
